(19) Europäisches Patentamt
European Patent Office
Office européen des brevets

(11) **EP 4 531 293 A1**

(12) **EUROPEAN PATENT APPLICATION**

(43) Date of publication:
**02.04.2025 Bulletin 2025/14**

(21) Application number: **23200743.5**

(22) Date of filing: **29.09.2023**

(51) International Patent Classification (IPC):
**H04B 1/04** *(2006.01)* **H04L 27/36** *(2006.01)*

(52) Cooperative Patent Classification (CPC):
**H04B 1/0475;** H04B 1/0483; H04L 27/361

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **INTEL Corporation**
**Santa Clara, CA 95054 (US)**

(72) Inventors:
• **BOROKHOVICH, Eli**
**7176409 Modiin-Maccabim-Reu (IL)**
• **BEN-BASSAT, Assaf**
**3440306 Haifa (IL)**

(74) Representative: **2SPL Patentanwälte PartG mbB**
**Landaubogen 3**
**81373 München (DE)**

(54) **TRANSMITTER AND METHOD TO GENERATE A TRANSMIT SIGNAL**

(57) A transmitter comprises a first amplifier coupled to a first modulated local oscillator signal and a second amplifier coupled to a second modulated local oscillator signal. Digital to time conversion circuitry is configured to generate the first modulated local oscillator signal and the second modulated local oscillator signal such that the second modulated local oscillator signal has a delay to the first modulated local oscillator signal.

FIG. 1

## Description

## Field

Examples relate to transmitters and to methods to generate a transmit signal, for example using a polar signal representation.

## Background

Transmitters of, for example, mobile or wireless communication networks, are required to generate signals having to meet specific spectral requirements. For example, the power of the signal outside of the transmission band (out-of-band noise) may be required to be low to not disturb neighboring bands usable to also transmit or receive signals. High-performance Radio Frequency (RF) passive filters can be used to band path filter a transmission (Tx) signal to remove such Tx out-of-band noise. However, filters of that kind are usually implemented in expensive Surface Acoustic Wave (SWA)/ Bulk Acoustic Wave (BAW) technology, while also other options may exist. Another option to remove out-of-band noise are Self-Interference Cancellers (SIC) if transmitters and receivers (Rx) are co-located. In Self-Interference Cancellers, transmit noise is routed back to a receiver from the transmitter's output and sampled in the co-located receiver. Equalized Tx out-of-band noise is then subtracted from the receiver signal, so that the Tx noise is partly cancelled at the receiver. However, those approaches may be expensive, may consume additional semiconductor area or may be complicated to control so that there is a demand for a superior implementation.

## Brief description of the Figures

Some examples of apparatuses and/or methods will be described in the following by way of example only, and with reference to the accompanying figures, in which

Fig. 1    illustrates an example of a transmitter;

Fig. 2    illustrates a further example of a transmitter using a multi-modulus divider;

Fig. 3    illustrates a further example of a transmitter using efficient digital to time conversion circuitry;

Fig. 4    illustrates a further example having a higher filtering capability;

Fig. 5    shows an example for an implementation of delay circuitry;

Fig. 6    shows a further example for an implementation of delay circuitry;

Fig. 7    illustrates an example of a spectral density of an example of a transmitter;

Fig. 8    illustrates further example of spectral densities of examples of transmitters;

Fig. 9    shows a flow chart of an example of a method to generate a transmit signal; and

Fig. 10    shows a block diagram of a user device comprising an example of a transmitter.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Examples relate to a transmitter, comprising a first amplifier coupled to a first modulated local oscillator signal and a second amplifier coupled to a second modulated local oscillator signal. Digital to time conversion is circuitry configured to generate the first modulated local oscillator signal and the second modulated local oscillator signal such that the second modulated local oscillator signal has a delay to the first modulated local oscillator signal. Using the modulated local oscillator signals that are delayed to one another to generate a signal transmitted by the transmitter can result in a signal that has a spectrum as if it was filtered by an Finite Impulse Response (FIR) Filter, which may allow to reduce, amongst others, out of band noise in an efficient manner. For example, the amount of the delay may define a distance between a notch of the FIR filter and a transmit band of the signal generated by the transmitter. The delay may be chosen so as to result with the desired filter characteristics of the FIR filter.

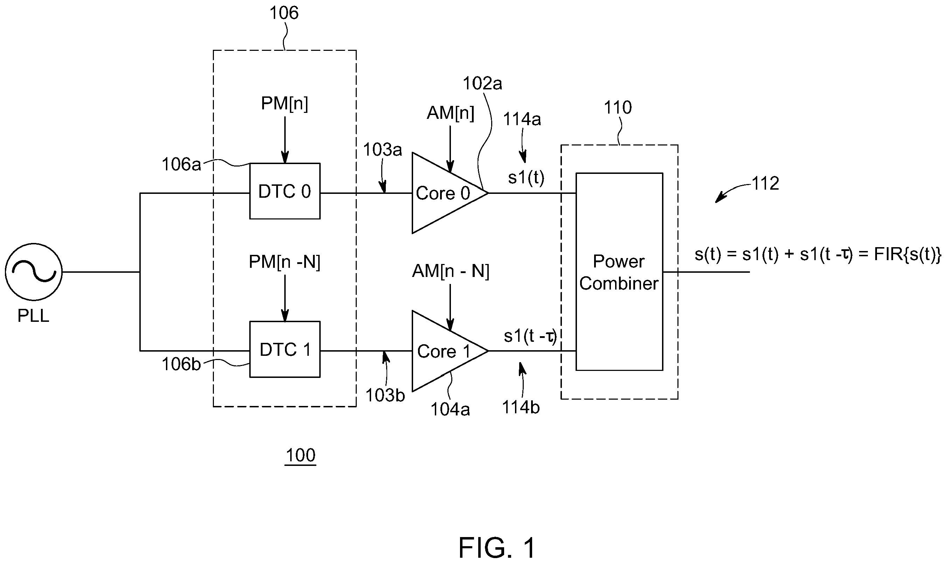

Fig. 1 illustrates an example of a transmitter 100. The transmitter 100 is a polar transmitter and comprises a first amplifier 102a that is coupled to and triggered by a first modulated local oscillator signal (MOLO) 103a and a second amplifier 104a that is coupled to and triggered by a second modulated local oscillator signal 103b. Digital to time conversion circuitry 106 is configured to generate the first modulated local oscillator signal 103a and the second modulated local oscillator signal 103b such that the second modulated local oscillator signal 103b has a delay to the first modulated local oscillator signal 103a. A polar transmitter is a type of radio frequency (RF) transmitter architecture often used in wireless communication systems, particularly in mobile phones, wireless equipment compliant with IEEE 802.11 and other portable devices. It is designed to efficiently generate and transmit RF signals, such as those used for wireless and cellular communication, while trying to minimize power consumption and interference. The term "polar" in polar transmitter refers to the use of polar coordinates to represent the amplitude and phase of the RF signal. In contrast to traditional Cartesian coordinates (I/Q or in-phase/quadrature), which represent the signal as a combination of its amplitude and phase, polar coordinates represent the signal as separate magnitude (amplitude) and phase components. This representation may allow for a more efficient amplification and modulation of the RF signal, where the phase component is used to synthesize the phase modulated local oscillator signal (which is the phase modulated carrier signal) that is used to trigger RF-DAC's to generate the signal with a magnitude as given by the magnitude component.

In the illustration of fig. 1, a first digital to time conversion circuit 106a generates the first modulated local oscillator (LO) signal 103a and a second digital to time conversion circuit 106b generates the second modulated local oscillator signal 103b. The modulated LO signals are signals based on the carrier frequency of the generated RF signal. However, the individual signal edges of the modulated LO (MOLO) signal are shifted so as to represent the desired phase of the resultant Phase- and Amplitude Modulated signal 112 generated at an output of the transmitter 100. In other words, the signal edges of the MOLO Signal are not equidistant, but the mean distance between the signal edges corresponds to the carrier frequency of the generated RF signal.

The first modulated local oscillator (LO) signal 103a triggers a first amplifier 102a that generates a first RF signal 114a with a strength as given by the magnitude component. Likewise, the second modulated local oscillator signal 103b triggers a second amplifier 104a to generate a second RF signal 114b that has the delay $\tau$ with respect to the first RF signal 114a.

In fig. 1, the resultant RF signal 112 generated by transmitter 100 is generated by signal combination circuitry 110 that combines the RF signals 114a (s1(t)) and 114b (s1(t-$\tau$)) generated by means of the first amplifier 102a and the second amplifier 104a.

Since RF signal 114b is delayed with respect to RF signal 114a by number of samples $\tau$ (corresponding to a delay time), the combination of the RF signals 114a and 114b results in a Phase and Amplitude Modulated signal 112 that is filtered with a 2 Tap FIR filter. By appropriately choosing the delay $\tau$, the filter characteristic can be adjusted to achieve the desired goal of the filter. For example, the frequency of notches of a notch filter can be adjusted to result with a filter suppressing out of band noise or to achieve arbitrary different filter goals.

Examples of implementations described herein may enable programmable filtering of a transmitter's out-of-band noise in a compact, silicon integrated way. This may allow to save expensive external filters while achieving high flexibility due to programmability by choosing an appropriate $\tau$.

The implementation can be very efficient when compared to conventional approaches, since the filter characteristics can be programmed without requiring a change of hardware. For example, if Tx-Rx frequency separation decreases (and therefore the distance of the filter's notch to the transmission band) passive RF filters become bigger in PCB area and more expensive (BAW/-SAW technology), making them hard and expensive to integrate. Self-Interference Cancellers (SIC) require an additional auxiliary receiver, which must be very selective to remove high-power Tx carrier. This increases silicon area. It also requires calibration of the Tx-Rx channel response, which can be time-variable.

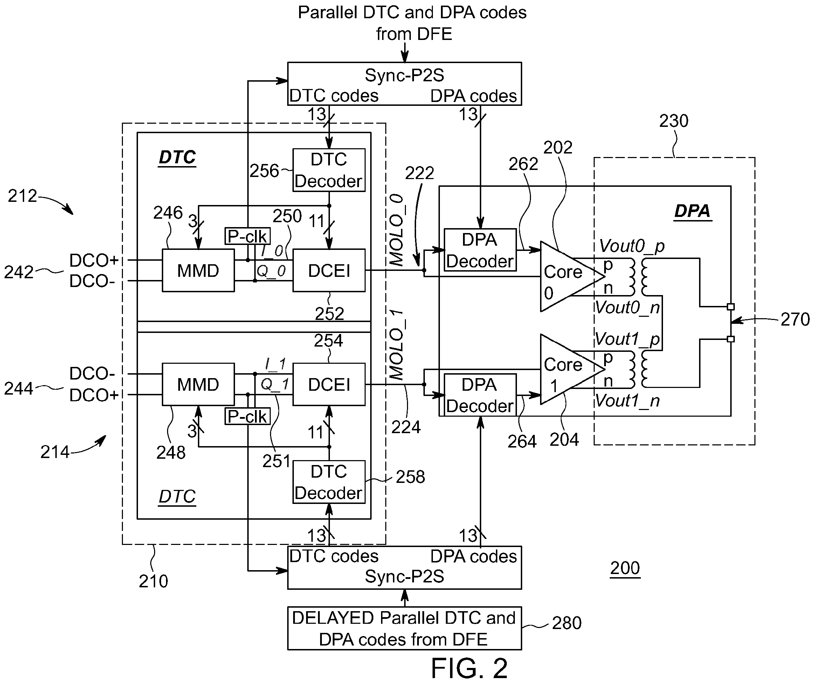

Fig. 2 illustrates an example of an implementation of a transmitter using a multi-modulus divider.

Similar to the example of fig. 1, the example of fig. 2 is essentially a redundant implementation of a polar transmitter. The polar transmitter 200 has a first branch 212 and a second branch 214. The branches are symmetric and only branch 212 is explained in detail. Digital to time conversion circuitry 210 operates to control the generation of the first MOLO signal 222 and the second MOLO signal 224 that trigger first amplifier 202 and second amplifier 204, respectively.

The first MOLO signal 222 is synthesized in a two-step approach. An external oscillator signal 242, for example generated by a voltage controlled oscillator, is input into a multi-modulus divider (MMD) 246 configured generate a local oscillator signal 250 having a frequency of a fraction of the frequency of the external oscillator signal 242. The fraction corresponds to an integer number. The fraction can be programmed by means of a control word and it can be time varying. In the illustrated example, the control word is 3 bits and hence, 8 different integer division factors can be used. The MMD 246 is used to coarsely define the position of the signal edges of the first MOLO signal 222. The final position of every signal edge within the first MOLO signal 222 is defined by subsequent programmable delay circuit 252 that can delay the signal edges as defined by a further control word. In the present implementation, the further control word is 11 bits wide. After every signal edge is delayed as per the further control word, the MOLO signal 222 is ultimately synthesized. The control words are generated by a digital to time controller 256 that translates the phase component of the polar signal representation into the control words for every sample of the time discrete digital circuit. The control words depend on the particular choice of the MMD 246 and the programmable delay circuit 252 and can, of course have different length than the once illustrated in fig. 2. MMD 248, programmable delay circuit 254 and digital to time controller 256 of the second branch 214 operate identically. However, their control words are delayed by the delay τ.

The MOLO signals 222 and 224 trigger amplifiers 202 and 204, respectively. While the digital to time conversion circuitry 210 synthesizes the phase of the resultant RF signal of the transmitter, the amplifiers 202 and 204 (which may also be denoted RF DAC or (power) core) generate the required amplitude/magnitude. To this end, they are not only triggered by the MOLO signals 222 and 224 but do, in parallel, receive amplitude control words 262 and 264. In the implementation illustrated in fig. 2, the amplitude control words 262 and 264 have a width of 13 bits which is identical to the width of the phase control words. The phase control words are split into the integer number defining the division factor of the MMDs 246 and 248 and the further control words for the programmable delay circuits 252 and 254. In further implementations, the width of the phase control word and of the amplitude control words may also be different.

As illustrated in fig. 1, the RF signals generated by amplifiers 202 and 204 are combined by means of a transformer 230 to provide the RF signal 270 of the transmitter 200.

Very much like in the implementation of fig. 1, digital to time conversion circuitry 200 is configured to generate the first modulated local oscillator signal 222 and the second modulated local oscillator signal 224 such that the second modulated local oscillator signal 224 has a delay to the first modulated local oscillator signal 222. In fig. 2, the delay is achieved by implementing an external delay control 280 that delays the phase control words and the amplitude control words of branches 214 and 212 with respect to each other.

In summary, the transmitter 200 comprises an input for an external oscillator signal 242, 244 and multi-modulus dividers 246, 248 configured to generate local oscillator signals having a frequency of a fraction of the frequency of the external oscillator signal 242. A first signal modulation circuit comprising digital to time controller 256 and programmable delay circuit 252 is configured to modulate the frequency of the local oscillator signal 250 based on a first phase control signal. A second signal modulation circuit comprising digital to time controller 258 and programmable delay circuit 254 is configured to modulate the frequency of local oscillator signal 251 based on a second phase control signal. Delay circuitry 280 providing the second phase control signal and the second amplitude control signal for the second branch 244 is configured to delay the local oscillator signal by a number of cycles of the external oscillator signal 244.

As previously described, the implementation of FIR characteristics in a digital polar transmitter can be based on delaying modulation commands per branch of the transmitter. Although polar digital transmitter architectures utilize non-uniform sampling, the examples described in the subsequent paragraphs may allow for an efficient implementation of the concept.

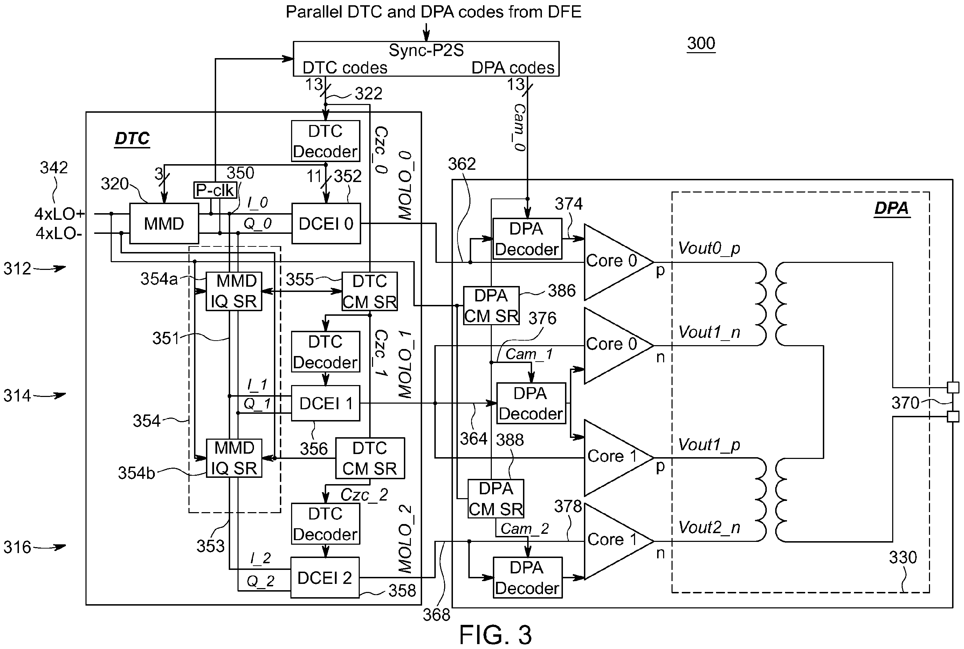

Fig. 3 illustrates a further example of a transmitter 300 using efficient digital to time conversion circuitry resulting in an RF signal 370 having a 3 tap FIR characteristic. The 3 tap FIR characteristic results from 3 RF signals combined in signal combination circuit 330. The basic principle of operation of the circuits of transmitter 300 is similar to the one of fig. 2. Therefore, those basic principles will not be repeated but the following discussion instead focusses on the differences which predominantly exist in the way the delay between branches 312, 314, and 316 of the transmitter 300 is implemented.

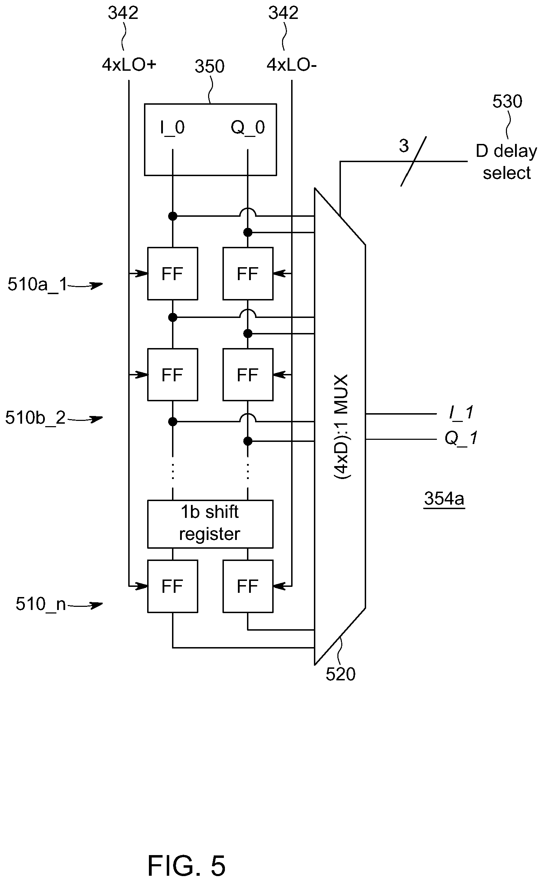

The transmitter 300 comprises a single a multi-modulus divider 320 configured to generate a local oscillator signal 350 having a frequency of a fraction of the frequency of external oscillator signal 342, the fraction corresponding to an integer number defined by a phase control signal/word 322. Other than in the implementation of fig. 2, the transmitter 300 does not have fully redundant branches. Instead, the local oscillator signal 350 itself is delayed by a number of cycles of the external oscillator signal 342 using delay circuitry 354. The delay circuitry 354 is programmable and clocked by the external oscillator signal 342. Branches 314 and 316 have dedicated delay elements 354a and 354b. A possible implementation of such a delay element is illustrated in fig. 5 and shortly described in one of the subsequent paragraphs.

In the example of fig. 3, phase delay circuit 355 is configured to delay the second control signal for the second programmable delay circuit 356 relative to the first control signal for the first programmable delay circuit 352. In the implementation of fig. 3, the delay is chosen to be in synchronization with the delayed local oscillator signals generated by delay elements 354a and 354b. That is, the delay corresponds to the number of cycles of the external oscillator used to define the division factor of MMD 320. In other examples, however, the delay may also be chosen at the higher resolution of the external oscillator signal 342, which may allow to define the filter characteristics (e.g. the position of a notch frequency relative to the transmit band) with higher accuracy. In other words, the delay may become as little as one sample of the external oscillator signal 342 instead of the multiple samples given by the division factor.

The combination of delayed LO signals 351 and 353 and the delayed control words for the programmable delay circuits 356 and 358 result in MOLO signals 362, 364 and 368 being delayed with respect to one another, the delay being individually programmable for each branch 314, 316.

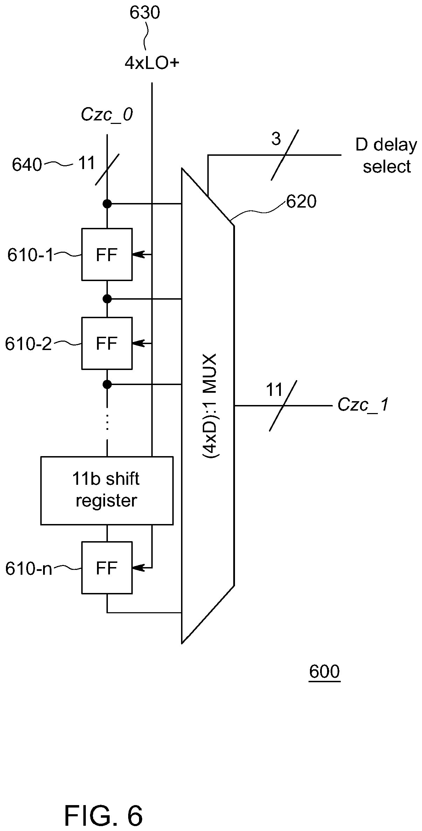

To also appropriately delay amplitude control words/signals for the amplifiers, amplitude delay circuits 386 and 388 are used. For example, amplitude delay circuit 386 is configured to delay second amplitude control word 376 relative to first amplitude control word 374. The delay is chosen to correspond to the delay of the phase control words. A possible implementation of the delay circuits to delay amplitude control words and phase control words is illustrated in fig. 6.

In summary, the transmitter of fig. 3 implements a 3-tap Tx-FIR within a Polar Digital transmitter. The transmitter 300 implements phase/amplitude command delay in a DTC-based digital transmitter. To deal with the limitation of non-uniform sampling used in a digital polar transmitter, the delay is performed by shift registers sampled with a uniform external oscillator (DCO) clock used for MMD operation (e.g. four times the command rate). In addition, MMD output signals (AKA I/Q) must also be delayed by the same method. This allows to avoid the use of multiple MMDs and eliminates the need of a complex phase synchronization mechanism.

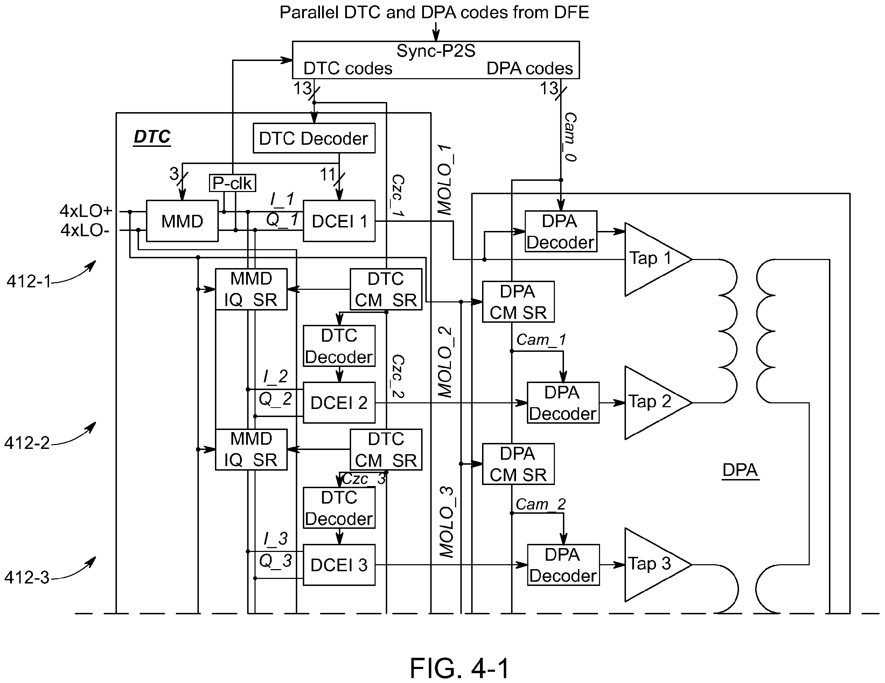

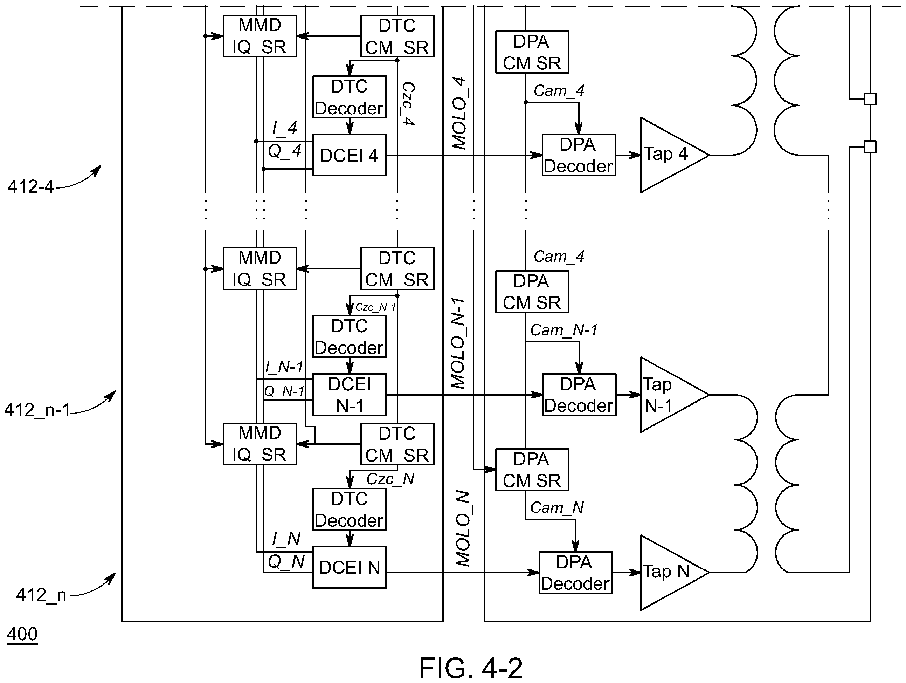

As compared to a redundant approach illustrated in figs. 1 and 2, the example of fig. 3 may avoid a potential $n \cdot \frac{\pi}{4}$ phase misalignment between the 2 multi-modulus dividers of the example of fig. 2. A phase misalignment risk would require a synchronization mechanism that will significantly complicate the solution. This synchronization would also practically limit the maximum amount of FIR taps to 2, while the examples of figs. 3 and 4 do allow an arbitrary number of taps. The more compact implementation of figs. 3 and 4 uses shift registers on "I" and "Q" signals sampled at 4xLO rate (DCO CLK or external oscillator signal). This utilizes the fact that I and Q signals change at 4xLO rate, thus shift-registering at this rate allows to create a delayed 1_1 and Q_1 for the delayed DCEI_1 without multiplying the MMD, and therefore solves the synchronization issue described above. The same principle of SRs at 4xLO rate can be applied to the DTC and DPA commands, thus eliminating the need for extensive synchronization circuitry.

Examples of transmitters allow to filter/reduce transmitter's out-of-band noise also at very close frequency offsets in a silicon-integrated way, reducing the need of expensive external filters.

For example, Tx out of band noise at close frequency offsets has been identified as one of the main impairments that limit "WiFi Simultaneous-Multi-Channel" and "WiFi-Bluetooth corunning" use cases. Examples of transmitters may enable those use cases in a very flexible manner and at reasonable cost.

The use of examples of transmitters may be characterized in that they declare simultaneous Tx/Rx operation at short frequency separation without specific external filtering (usually SAW/BAW). Transceivers that contain polar digital transmitters. Silicon layout observation may identify usage of only a single phase-modulator (MMD or similar) although two or more RF signals are generated internally. Transceivers containing an example of a transmitter may declare the following capabilities.

- Simultaneous Tx and Rx (FDD or asynchronous operation of 2 TDD transceivers) operation at short frequency offsets.

- No external filtering is required for simultaneous Tx/Rx operation (FDD or asynchronous operation of 2 TDD transceivers).

- A digital polar transmitter implementation with multicore Power/Driver Amplifier.

- a configurable/programmable integrated notch filter for transmitter's out-of-band noise reduction.

Fig. 4 illustrates the generalization of the implementation of fig. 3 to an n-tap FIR characteristic by using n branches 412_1, ..., 412_n of the type explained in detail with respect to fig. 3.

Fig. 5 illustrates an example for an implementation of delay circuitry 354a to delay local oscillator signal 350 generated by MMD 320 by a number of cycles of the external oscillator signal 342. The local oscillator signal 350 as well as the external oscillator signal 342 comprise a positive component and a negative component. While the explanation of the delay circuitry 354a may focus on only one of the components, it is likewise valid for the other component of the signals. Delay circuitry 354a comprises multiple shift registers 510a, 510b, ..., 510n connected in series, an input of the first shift register 510a of the series being connected to the local oscillator signal 350. An output of every shift register is connected to a multiplexer 520. The shift registers are triggered by the external oscillator signal 342 so that the local oscillator signal 350 can be delayed in units of the external oscillator signal 342. The delay is programmable by a control word selecting the input of the multiplexer 520.

In other words, fig. 5 shows the implementation of a MMD IQ shift register. The I-signal's SR and Q-signal's SR are clocked with positive and negative 4xLO clocks, respectively.

Similarly, fig. 6 shows an example for an implementation of phase delay circuitry 600 that is similar to the implementation of the delay circuitry 354. The phase delay circuitry 600 comprises multiple shift registers 610_1, 610_2, ..., 610_n connected in series. An input of the first shift register 610_1 is configured to receive the second control signal 640, an output of the shift registers are connected to a multiplexer 620. The shift registers are triggered by the external oscillator signal 630. The shift registers 610_1, 610_2, ..., 610_n do, at least, have the width of the second control signal 640. Identical delay circuitry can be used to delay the amplitude control words.

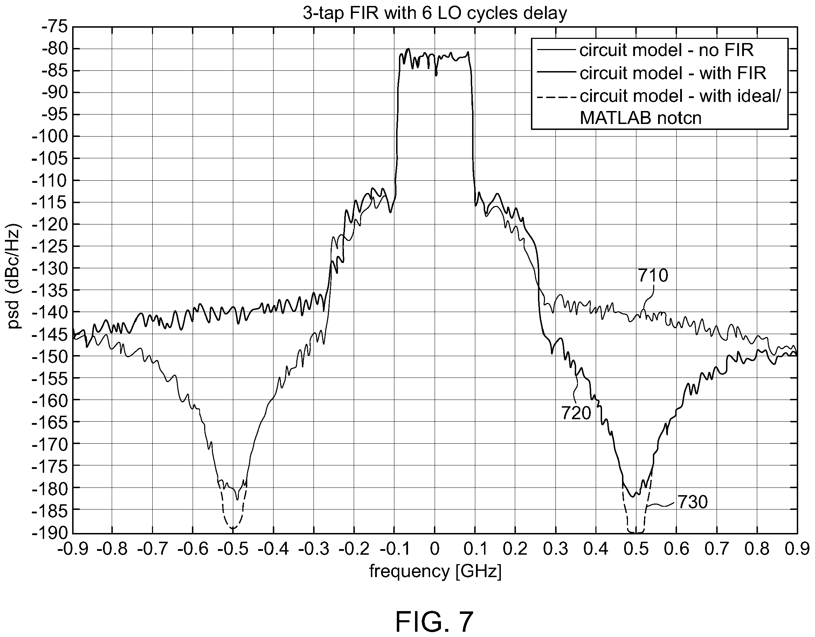

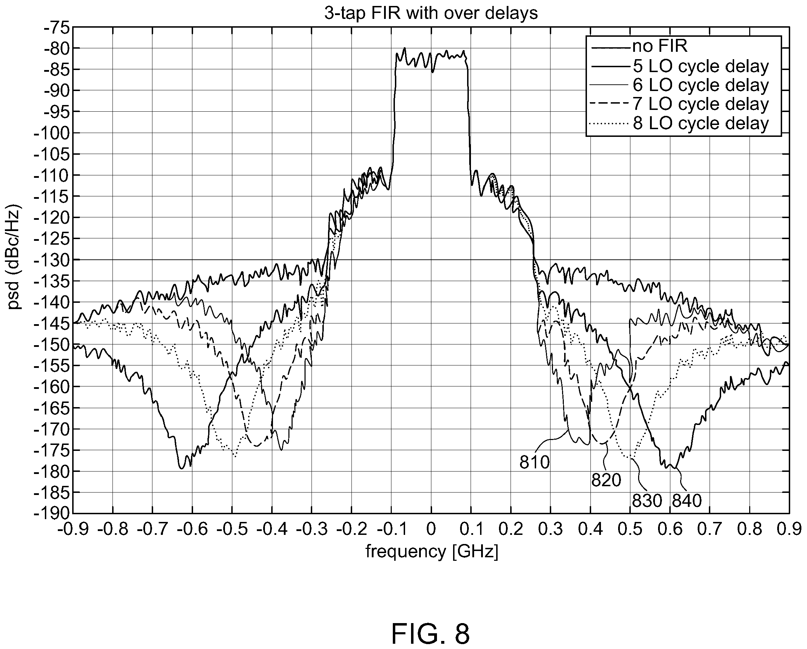

Fig. 7 illustrates an example of a power spectral density (PSD) of an example of a transmitter having a 200 MHz wide transmit band. As a reference, graph 710 illustrates the output of a transmitter without a filter. Graph 720 illustrates the PSD of a transmitter having a 3-tap FIR filter tuned to exhibit a notch at 400MHz distance of the transmit band, corresponding to a delay of 6 local oscillator cycles. Reference graph 730 illustrates the mathematical prediction of an ideal 3-tap filter, proofing the successful implementation of the concept in the transmitter under observation. Generally, the position of the notch of the filter depends on the number of LO cycles, allowing to efficiently program the filter characteristics and the position of the notch in particular, as illustrated in fig. 8

Fig. 8 illustrates further example of spectral densities of examples of transmitters having different delays. Graph 810 corresponds to a delay of 8 LO cycles. Graph 820 corresponds to a delay of 7 LO cycles. Graph 830 corresponds to a delay of 6 LO cycles. Graph 840 corresponds to a delay of 5 LO cycles. As elaborated on before, further embodiments may allow to use delay times in multiples of the external oscillator signal instead of in multiples of the LO signal. Those embodiments allow to place the notch with an even higher resolution and also in between the notches illustrated in fig. 8.

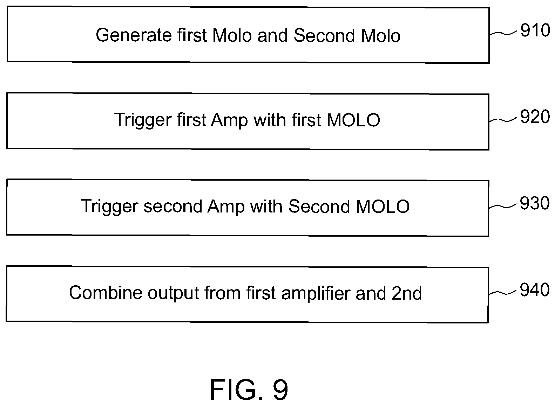

Fig. 9 shows a flow chart of an example of a method to generate a transmit signal. The method comprises generating a first modulated local oscillator signal and a second modulated local oscillator signal such that the second modulated local oscillator signal has a delay to the first modulated local oscillator signal in step 910. The method further comprises triggering 920 a first amplifier by the first modulated local oscillator signal and triggering 930 a second amplifier by the second modulated local oscillator signal. Further, the method comprises combining 940 the signal output from the first amplifier and the signal output from the second amplifier.

The previously described examples may be summarized as implementing a Tx-FIR technique for transmitter's out-of-band noise filtering. They create two or more transmitting streams of the same signal. Th FIR (sinc) response can be achieved by delaying the streams relative one to another. This technique can be implemented in digital transmitters by simply delaying the commands of one or more DPA streams. Digital polar transmitter works with non-uniform sampling. DTC-based polar digital transmitters utilize MMD output signals "I" and "Q" or more specifically their time-interpolation signal (AKA "P-clock") as a clock which pulls the phase commands for DTC. The DTC output signal (AKA Modulated LO or MOLO) is used as a clock which pulls the amplitude codes for amplifiers (SC-PA, DPA).

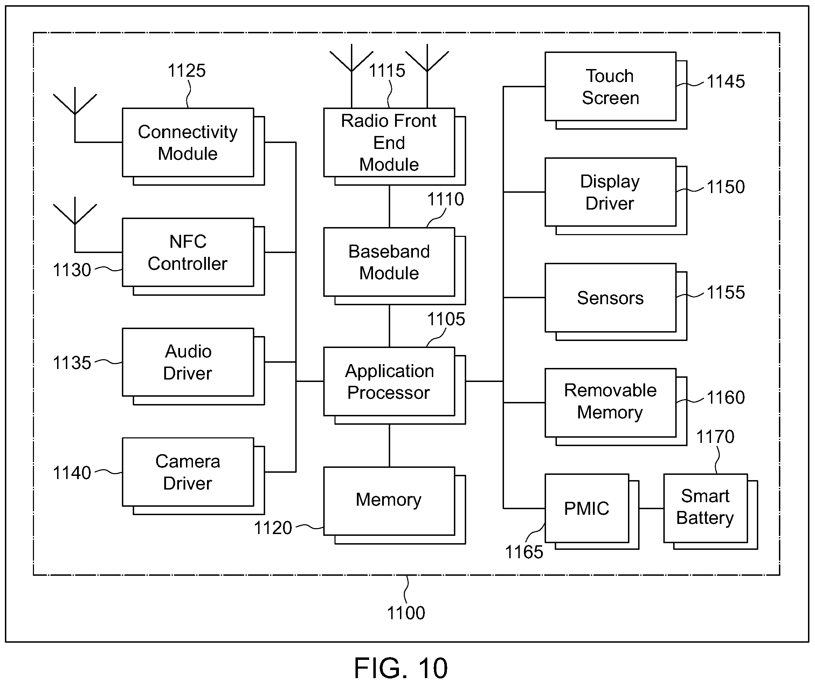

Figure 10 illustrates a user device 1100 in accordance with an aspect. The user device 1100 may be a mobile device in some aspects and includes an application processor 1105, baseband processor 1110 (also referred to as a baseband module), radio front end module (RFEM) 1115, memory 1120, connectivity module 1125, near field communication (NFC) controller 1130, audio driver 1135, camera driver 1140, touch screen 1145, display driver 1150, sensors 1155, removable memory 1160, power management integrated circuit (PMIC) 1165 and smart battery 1170. For example, the connectivity module 1125 may comprise a transmitter according to one of the previously describes examples.

In some aspects, application processor 1105 may include, for example, one or more CPU cores and one or more of cache memory, low drop-out voltage regulators (LDOs), interrupt controllers, serial interfaces such as serial peripheral interface (SPI), inter-integrated circuit (I2C) or universal programmable serial interface module, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports.

In some aspects, baseband module 1110 may be implemented, for example, as a solder-down substrate including one or more integrated circuits, a single packaged integrated circuit soldered to a main circuit board, and/or a multi-chip module containing two or more integrated circuits.

In the following, some examples of the proposed concept are presented:

An example (e.g., example 1) relates to a transmitter, comprising a first amplifier coupled to a first modulated local oscillator signal, a second amplifier coupled to a second modulated local oscillator signal, digital to time conversion circuitry configured to generate the first modulated local oscillator signal and the second modulated local oscillator signal such that the second modulated local oscillator signal has a delay to the first modulated local oscillator signal.

Another example (e.g., example 2) relates to a previous example (e.g., example 1) or to any other example, further comprising that the digital to time conversion circuitry comprises an input for an external oscillator signal, a multi-modulus divider configured generate a local oscillator signal having a frequency of a fraction of the frequency of the external oscillator signal, the fraction corresponding to an integer number, a first signal modulation circuit configured to modulate the frequency of the local oscillator signal based on a first control signal, and a second signal modulation circuit configured to modulate the frequency of the local oscillator signal based on a second control signal.

Another example (e.g., example 3) relates to a previous example (e.g., example 2) or to any other example, further comprising delay circuitry configured to delay the local oscillator signal by a number of cycles of the external oscillator signal.

Another example (e.g., example 4) relates to a previous example (e.g., example 3) or to any other example, further comprising a phase delay circuit configured to delay the second control signal relative to the first control signal by the number of cycles of the external oscillator.

Another example (e.g., example 5) relates to a previous example (e.g., one of the examples 3 or 4) or to any other example, further comprising that the number of cycles corresponds to an integer multiple of the integer number.

Another example (e.g., example 6) relates to a previous example (e.g., one of the examples 1 to 5) or to any other example, further comprising an amplitude delay circuit configured to delay a second amplitude control word for the second amplifier relative to a first amplitude control word for the first amplifier by a number of cycles of the external oscillator.

Another example (e.g., example 7) relates to a previous example (e.g., example 6) or to any other example, further comprising that the number of cycles corresponds to an integer multiple of the integer number.

Another example (e.g., example 8) relates to a previous example (e.g., one of the examples 3 to 7) or to any other example, further comprising that the delay circuitry comprises multiple shift registers connected in series, an input of the first shift register of the series being connected to the local oscillator signal, an output of the shift registers being connected to a multiplexer, wherein the shift registers are coupled to the external oscillator signal.

Another example (e.g., example 9) relates to a previous example (e.g., one of the examples 3 to 8) or to any other example, further comprising that the phase delay circuit comprises multiple shift registers connected in series, an input of the first shift register being configured to receive the second control signal, an output of the shift registers being connected to a multiplexer, wherein the shift registers are coupled to the external oscillator signal.

Another example (e.g., example 10) relates to a previous example (e.g., one of the examples 3 to 9) or to any other example, further comprising signal combination circuitry that combines a signal of an output of the first amplifier with a signal at an output of the second amplifier.

Another example (e.g., example 11) relates to a device comprising a transmitter according to any one of examples 1 to 10.

Another example (e.g., example 12) relates to a previous example (e.g., example 11) or to any other example, further comprising that the transmitter is configured to operate according to one of the standards IEEE 802.11 or Bluetooth.

An example (e.g., example 13) relates to a method to generate a transmit signal, the method comprising generating a first modulated local oscillator signal and a second modulated local oscillator signal such that the second modulated local oscillator signal has a delay to the first modulated local oscillator signal, triggering a first amplifier by the first modulated local oscillator signal, triggering second amplifier by the second modulated local oscillator signal, and combining the signal output from the first amplifier and the signal output from the second amplifier.

Another example (e.g., example 14) relates to a previous example (e.g., example 13) or to any other example, further comprising generating a local oscillator signal having a frequency of a fraction of the frequency of an external oscillator signal, the fraction corresponding to an integer number, modulating the frequency of the local oscillator signal based on a first control signal, and modulating the frequency of the local oscillator signal based on a second control signal.

Another example (e.g., example 15) relates to a previous example (e.g., example 13) or to any other example, further comprising delaying the second control signal by a number of cycles of an external oscillator as compared to the first control signal.

Another example (e.g., example 16) relates to a previous example (e.g., example 15) or to any other example, further comprising that the number of cycles corresponds to an integer multiple of the integer number.

Another example (e.g., example 17) relates to a previous example (e.g., one of the examples 13 to 16) or to any other example, further comprising delaying a second amplitude control word for a second amplifier by a number of cycles of the external oscillator as compared to a first amplitude control word for a first amplifier.

Another example (e.g., example 18) relates to a computer program for, when the computer program is executed by hardware, cause a second modulated local oscillator of a transmitter to have a delay to a first modulated local oscillator signal in a transmitter of any of examples 1 to 10.

An example (e.g., example 19) relates to means for generating a transmit signal, comprising means for generating a first modulated local oscillator signal and a second modulated local oscillator signal such that the second modulated local oscillator signal has a delay to the first modulated local oscillator signal, means for triggering a first amplifier by the first modulated local oscillator signal, means for triggering second amplifier by the second modulated local oscillator signal, and means for combining the signal output from the first amplifier and the signal output from the second amplifier.

Another example (e.g., example 20) relates to a previous example (e.g., example 19) or to any other example, further comprising means for generating a local oscillator signal having a frequency of a fraction of the frequency of an external oscillator signal, the fraction corresponding to an integer number, means for modulating the frequency of the local oscillator signal based on a first control signal, and means for modulating the frequency of the local oscillator signal based on a second control signal.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computerreadable and encode and/or contain machine-executable, processor-executable or computerexecutable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. A transmitter, comprising:

   a first amplifier coupled to a first modulated local oscillator signal;
   a second amplifier coupled to a second modulated local oscillator signal;
   digital to time conversion circuitry configured to generate the first modulated local oscillator signal and the second modulated local oscillator signal such that the second modulated local oscillator signal has a delay to the first modulated local oscillator signal.

2. The transmitter of claim 1, wherein the digital to time conversion circuitry comprises:

   an input for an external oscillator signal;
   a multi-modulus divider configured generate a local oscillator signal having a frequency of a fraction of the frequency of the external oscillator signal, the fraction corresponding to an integer number;
   a first signal modulation circuit configured to modulate the frequency of the local oscillator signal based on a first control signal; and
   a second signal modulation circuit configured to modulate the frequency of the local oscillator signal based on a second control signal.

3. The transmitter of claim 2, further comprising delay circuitry configured to delay the local oscillator signal by a number of cycles of the external oscillator signal.

4. The transmitter of claim 3, further comprising a phase delay circuit configured to delay the second control signal relative to the first control signal by the number of cycles of the external oscillator.

5. The transmitter of claim 3 or 4, wherein the number of cycles corresponds to an integer multiple of the integer number.

6. The transmitter of any one of claims 1 to 5, further comprising an amplitude delay circuit configured to delay a second amplitude control word for the second amplifier relative to a first amplitude control word for the first amplifier by a number of cycles of the external oscillator.

7. The transmitter of claim 6, wherein the number of cycles corresponds to an integer multiple of the integer number.

8. The transmitter of any one of claims 3 to 7, wherein the delay circuitry comprises multiple shift registers connected in series, an input of the first shift register of the series being connected to the local oscillator signal, an output of the shift registers being connected to a multiplexer, wherein the shift registers are triggered by the external oscillator signal.

9. The transmitter of any one of claims 3 to 8, wherein the phase delay circuit comprises multiple shift registers connected in series, an input of the first shift register being configured to receive the second control signal, an output of the shift registers being connected to a multiplexer, wherein the shift registers are triggered by the external oscillator signal.

10. A method to generate a transmit signal, the method comprising:

generating a first modulated local oscillator signal and a second modulated local oscillator signal such that the second modulated local oscillator signal has a delay to the first modulated local oscillator signal;
triggering a first amplifier by the first modulated local oscillator signal;
triggering second amplifier by the second modulated local oscillator signal; and
combining the signal output from the first amplifier and the signal output from the second amplifier.

11. The method of claim 10, further comprising

generating a local oscillator signal having a frequency of a fraction of the frequency of an external oscillator signal, the fraction corresponding to an integer number;
modulating the frequency of the local oscillator signal based on a first control signal; and
modulating the frequency of the local oscillator signal based on a second control signal.

12. The method of claim 11, further comprising:
delaying the second control signal by a number of cycles of an external oscillator as compared to the first control signal.

13. The method of claim 12, wherein the number of cycles corresponds to an integer multiple of the integer number.

14. The method of any one of claims 10 to 13, further comprising:
delaying a second amplitude control word for a second amplifier by a number of cycles of the external oscillator as compared to a first amplitude control word for a first amplifier.

15. A computer program for, when the computer program is executed by hardware, cause a second modulated local oscillator of a transmitter to have a delay to a first modulated local oscillator signal in a transmitter of any of claims 1 to 9.

FIG. 1

FIG. 2

FIG. 3

FIG. 4-1

EP 4 531 293 A1

FIG. 4-2

FIG. 5

630

4xLO+

Czc_0

640 ⌇ 11

3    D delay
select

610-1 ⌇ FF

620

610-2 ⌇ FF

(4xD):1 MUX

11    Czc_1

610-n ⌇ FF

11b shift
register

600

# FIG. 6

FIG. 7

EP 4 531 293 A1

FIG. 8

EP 4 531 293 A1

| Generate first Molo and Second Molo | ~910 |

| Trigger first Amp with first MOLO | ~920 |

| Trigger second Amp with Second MOLO | ~930 |

| Combine output from first amplifier and 2nd | ~940 |

FIG. 9

FIG. 10

EP 4 531 293 A1

**Europäisches Patentamt**
**European Patent Office**
**Office européen des brevets**

# EUROPEAN SEARCH REPORT

**Application Number**

EP 23 20 0743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASHOKE RAVI ET AL: "A 2.4-GHz 20 40-MHz Channel WLAN Digital Outphasing Transmitter Utilizing a Delay-Based Wideband Phase Modulator in 32-nm CMOS", IEEE JOURNAL OF SOLID-STATE CIRCUITS, IEEE, USA, vol. 47, no. 12, 1 December 2012 (2012-12-01), pages 3184-3196, XP011485416, ISSN: 0018-9200, DOI: 10.1109/JSSC.2012.2216671 * sections I and II * * figures 4, 5 * | 1-15 | INV. H04B1/04 H04L27/36 |
| X | US 2022/338148 A1 (GROSS SHAHAR [IL] ET AL) 20 October 2022 (2022-10-20) | 1-5,7-9, 15 | |
| A | * paragraph [0021] – paragraph [0046] * * figures 1-4 * | 6,10-14 | |
| A | US 2019/214944 A1 (PALASKAS GEORGIOS YORGOS [US] ET AL) 11 July 2019 (2019-07-11) * the whole document * | 1-15 | |

| | TECHNICAL FIELDS SEARCHED (IPC) |
|---|---|
| | H04B H04L |

The present search report has been drawn up for all claims

| Place of search | Date of completion of the search | Examiner |
|---|---|---|
| Munich | 13 March 2024 | Patrovsky, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 0743

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2024

| Patent document cited in search report | | Publication date | Patent family member(s) | | Publication date |
|---|---|---|---|---|---|
| US 2022338148 | A1 | 20-10-2022 | EP | 4082162 A1 | 02-11-2022 |
| | | | US | 2022338148 A1 | 20-10-2022 |
| | | | WO | 2021133399 A1 | 01-07-2021 |
| US 2019214944 | A1 | 11-07-2019 | DE | 112016007282 T5 | 27-06-2019 |
| | | | US | 2019214944 A1 | 11-07-2019 |
| | | | WO | 2018063223 A1 | 05-04-2018 |

EPO FORM P0459

For more details about this annex : see Official Journal of the European Patent Office, No. 12/82